Europäisches Patentamt

European Patent Office

Office européen des brevets

(11) Numéro de publication: **0 306 934**
**A2**

## (12) DEMANDE DE BREVET EUROPEEN

(21) Numéro de dépôt: 88114646.8

(22) Date de dépôt: 08.09.88

(51) Int. Cl.⁴: **H04L 11/16 , H04Q 9/14**

(30) Priorité: 09.09.87 CH 3490/87

(43) Date de publication de la demande:
15.03.89 Bulletin 89/11

(84) Etats contractants désignés:
**AT BE DE ES FR GB IT NL SE**

(71) Demandeur: **WILLEMIN ELECTRONIC S.A.**
**46, rue du Paddock**
**CH-2854 BASSECOURT(CH)**

(72) Inventeur: **Voillat, Jean-Pierre**
**Rue des Bouvreuils 6**
**CH-2800 Delemont(CH)**

(74) Mandataire: **Robert, Jean S.**
**51, route du Prieur**
**CH-1257 Landecy (Genève)(CH)**

(54) **Procédé de transmission électronique de données et installation pour la mise en oeuvre de ce procédé.**

(57) Le procédé et l'installation permettent la transmission électronique de données entre une station maître (20) et des stations esclaves (23) et le retour simultané de données en direction de la station maître, et ceci à l'aide d'un bus à deux conducteurs ($L_1$ et $L_2$) seulement. Les signaux digitaux émis par la station maître (20) sont à la fois des signaux de commande et des signaux d'alimentation en puissance des stations esclaves. Les bits de ces signaux sont d'un format tel qu'ils présentent des zones "mortes" pendant lesquelles ces signaux ne déploient pas d'effet et pendant lesquelles on peut donc interrompre leur transmission fidèle, en mettant à haute impédance l'un des conducteurs ($L_1$ ou $L_2$) du bit, ce qui rend possible une altération momentanée du signal. Une telle altération s'obtient en chargeant fortement le conducteur ($L_1$ ou $L_2$) mis à haute impédance, la présence ou l'absence d'une telle altération constituant la donnée qui doit être transmise d'une station esclave à la station maître.

FIG. 3

## Procédé de transmission électronique de données et installation pour la mise en oeuvre de ce procédé.

La présente invention a pour objet un procédé de transmission électronique de données entre une station maître et des stations esclaves, avec alimentation en puissance de ces dernières par la station maître.

L'invention a également pour objet une installation pour la mise en oeuvre de ce procédé.

Les installations électroniques classiques de gestion de données (notamment les automates programmables) sont pratiquement toujours construites sur une architecture centralisée, alors que les infrastructures générant ou utilisant lesdites données sont très largement dispersées dans des complexes allant de la simple machine, à de grands bâtiments publics.

Une telle conception se traduit toujours par un nombre considérable de conducteurs reliant, par un câblage très étendu, une installation centrale à toutes sortes d'aboutissants physiques.

Rares et coûteuses sont actuellement les installations permettant de traiter les données sur le site de leur exploitation, faisant appel à des bus de transmission informatique internes relativement complexes qui, de toute manière, ne permettent pas l'alimentation en puissance des différents terminaux.

Le but de la présente invention est de permettre "d'éclater" l'installation centrale de gestion de données en multiples "mini-installations" (stations esclaves) sises à l'endroit même de leur utilisation, reliées à une station maître par un bus réduit à deux conducteurs, servant à la fois à alimenter en puissance les stations esclaves et leurs aboutissants physiques, à transmettre à celles-ci des messages en provenance de la station maître et, simultanément, à transmettre des messages à partir des stations esclaves en direction de la station maître.

Ce but est atteint grâce aux moyens définis dans les revendications 1 et 5.

Le dessin représente, à titre d'exemple, une forme d'exécution de l'objet de l'invention.

La fig. 1 est le schéma d'une installation connue de transmission électronique de données dans laquelle l'acheminement des données ou informations ne se fait que dans le sens station maître-stations esclaves.

La fig. 2 est un diagramme illustrant le fonctionnement de l'installation de la fig. 1.

La fig. 3 illustre de façon schématique une installation de transmission de données permettant d'adresser des messages également des stations esclaves à la station maître, et

Les figs. 4 et 5 sont un tableau, respectivement des diagrammes, servant à expliquer le fonctionnement de l'installation de la fig. 3.

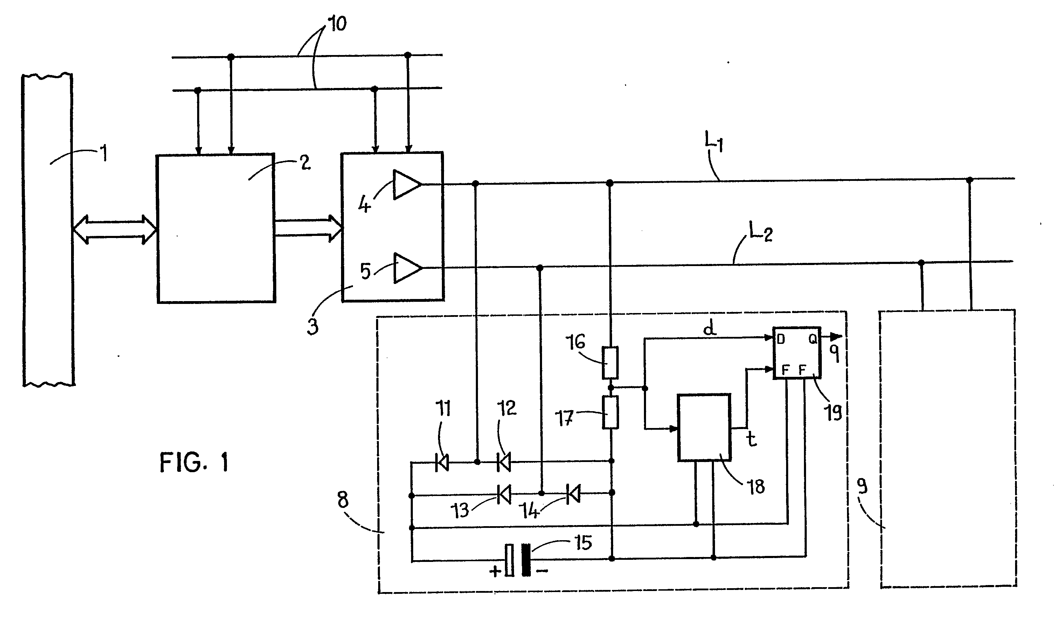

L'installation --connue-- représentée à la fig. 1 comprend un microprocesseur, dont n'a été représenté que le bus, désigné par 1, qui commande une station maître 2 assurant la surveillance et la gestion de l'installation. Cette station 2 applique, par l'intermédiaire d'un étage 3 de sortie de puissance, comprenant lui-même deux buffers 4 et 5, des signaux digitaux en opposition de phase, à deux conducteurs $L_1$ et $L_2$ constituant un bus assurant la liaison entre la station maître 2 d'une part et des stations esclaves d'autre part, dont deux seulement, désignées par 8 et 9, ont été représentées, mais qui peuvent être en plus grand nombre.

L'électronique de la station maître 2 et de l'étage de sortie 3 est alimentée par une ligne à courant continu 10, alors que les stations esclaves assurent chacune l'alimentation de leur électronique à l'aide d'un circuit redresseur comprenant quatre diodes 11, 12, 13 et 14 et un condensateur de lissage 15 qui prélève son énergie des signaux appliqués sur les conducteurs $L_1$ et $L_2$, comme cela sera indiqué plus loin, ces signaux étant en opposition de phase. Ainsi, ces signaux ne servent pas uniquement à transmettre l'information de la station maître aux stations esclaves mais également à alimenter ces dernières en puissance.

Le dessin illustre encore, mais pour la station 8 seulement, un circuit de décodage des bits reçus sur les conducteurs $L_1$ et $L_2$ du bus de l'installation, qui comprend un diviseur de potentiel comprenant deux résistances 16 et 17, montées en série, un temporisateur 18 dont le signal de sortie est appliqué à un flip-flop 19 recevant également un signal $\underline{d}$ du diviseur de potentiel 16-17. Le signal de sortie 9 du flip-flop est appliqué à une électronique conventionnelle, non représentée, chargée de déchiffrer le message reçu.

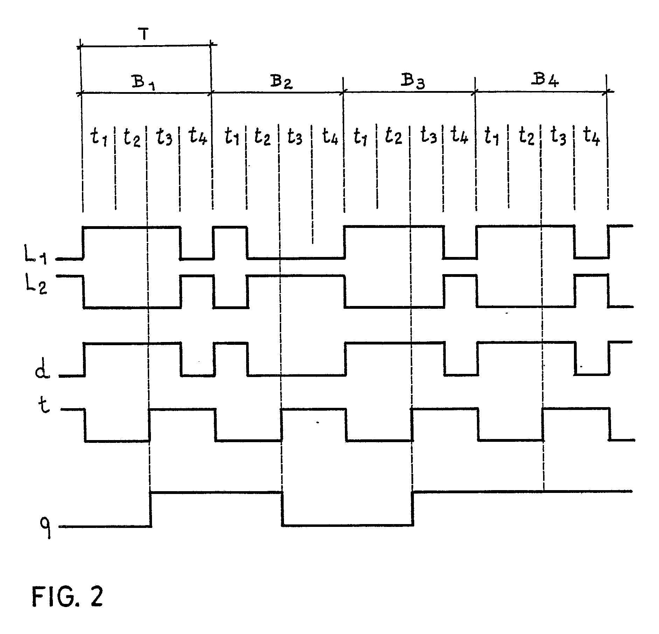

La fig. 2 illustre le fonctionnement de cette partie de l'installation :

Le message envoyé sur le bus $L_1$, $L_2$ et constitué par une succession de "1" et de "0", comme dans toute transmission informatique série. Cependant, le format des bits de chacun des signaux est tel que ces bits comportent chacun deux temps "morts" (irrelevant zones). La transmission complète d'un bit B nécessite un temps T, lequel se subdivise en quatre intervalles $t_1$, $t_2$, $t_3$ et $t_4$. En ne considérant que le conducteur $L_1$, on voit que le temps $t_1$ est le seul instant du temps T qui présente un flanc positif, lequel indique le départ d'un bit, et qu'à ce temps $t_1$ le signal sur le conducteur $L_1$ est toujours à "1". Le premier des temps morts de ce bit s'étend du flanc de $t_1$ jusqu'à la fin de celui-ci. Les temps $t_2$ et $t_3$ sont porteurs de l'état du bit transmis. Ainsi les bits $B_1$, $B_3$ et $B_4$ portent un "1" tandis que le bit $B_2$ porte un "∅". Pendant le temps $t_4$ le signal est toujours à l'état ∅, pour ce qui est du conducteur $L_1$, ceci pour assurer le flanc positif au début du temps $t_1$ suivant. Le temps $t_4$ n'étant plus porteur d'une information, il constitue le deuxième temps mort du bit. On peut ainsi reconnaître aisément les deux informations essentielles d'un bit B, savoir son début, déterminé par le flanc positif au début de $t_1$, et son état, déterminé par la valeur du signal aux temps $t_2$ et $t_3$. Le processus de décodage de l'état des bits est simple. Cet état étant stable dans les temps $t_2$ et $t_3$, comme représenté en $L_1$ à la fig. 2, il suffit de saisir cet état au temps $t_1 + t_2$ à partir du flanc positif de $t_1$. Le temporisateur 18 est activé par le flanc positif du signal $d$ et garde sa sortie $t$ à "∅" pendant le temps $\overline{t_1 + t_2}$.

Le flip-flop 19 transfère et maintient sur sa sortie l'état de $d$, à l'instant du flanc positif de $t$, puis le maintient jusqu'à la prochaine saisie d'un nouveau bit, comme on le voit en $g$ à la fig. 2.

Il va de soi que la gestion des messages adressés aux stations est plus complexe. Il n'est toutefois pas nécessaire d'aller plus loin dans l'étude de cette fonction, car les circuits mis en oeuvre ne concernent plus le principe de la transmission et font appel à une électronique classique.

Comme on le voit pour la station 8 (Fig. 1), les composants électroniques 18 et 19 et l'électronique qui leur est associée sont alimentés à partir du circuit redresseur 11 à 15. Celui-ci fonctionne comme suit : lorsque la tension sur le conducteur $L_1$ est positive et par conséquent celle sur le conducteur $L_2$ négative, un courant d'alimentation et de charge du condensateur 15 peut circuler de $L_1$, par la diode 11, le condensateur 15 et la diode 14, vers le conducteur $L_2$; lorsque les tensions sur $L_1$ et $L_2$ s'inversent, un courant traverse le condensateur 15 dans le même sens en passant par les diodes 13 et 12.

L'installation --connue en soi-- de la fig. 1 ne permet la transmission de messages que dans le sens station maître-stations esclaves.

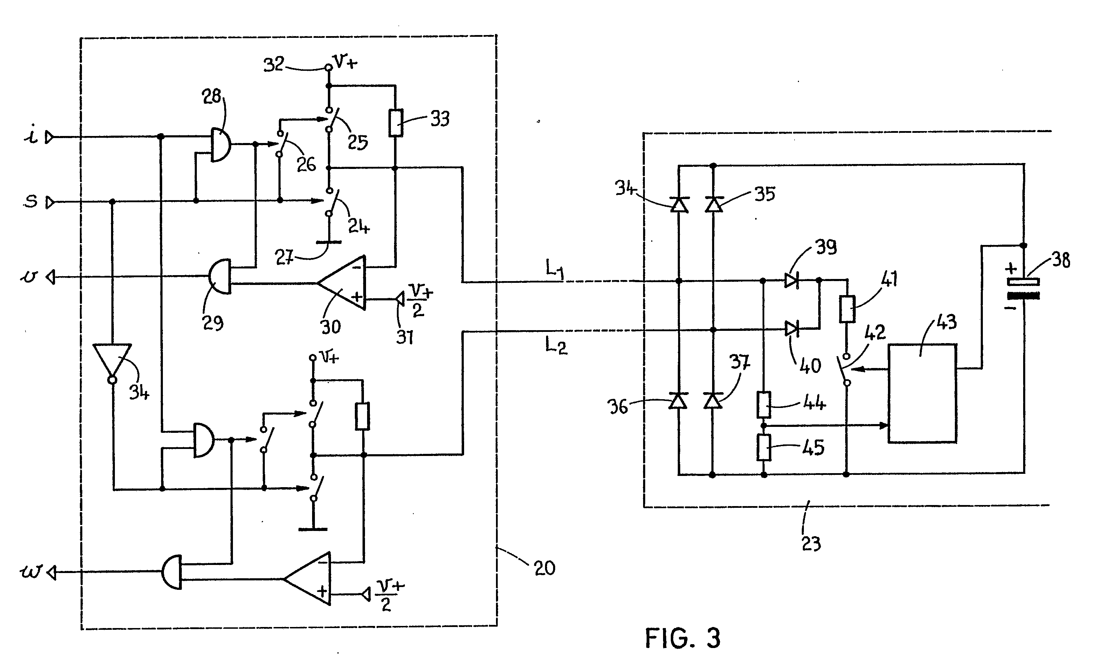

La fig. 3 représente partiellement et schématiquement une installation qui, tout en permettant comme la précédente d'envoyer des messages vers les stations esclaves et d'alimenter leur électronique, permet en outre d'envoyer, et simultanément, deux messages vers la station maître, en provenance d'une ou de deux stations esclaves quelconques, y compris celle vers laquelle la station maître est en train d'émettre.

Dans le cas de l'installation de la fig. 1, les buffers 4 et 5 de l'étage de sortie 3 sont constitués chacun d'un étage de puissance "Push-Pull" permettant de forcer le conducteur $L_1$ à la tension $V_+$, respectivement le conducteur $L_2$ à la tension ∅ V, si le signal d'entrée $s$ appliqué par la station maître 2 est à "1", ou de forcer le conducteur $L_1$ à ∅ V et le conducteur $L_2$ à $V_+$ si le signal $s$ est à "∅". Ainsi donc, ces buffers ne présentent que deux états. Dans le cas de l'installation de la fig. 3, au contraire, les buffers sont à trois états, le troisième état correspondant à une mise à impédance élevée (quelques centaines d'Ohms) du conducteur sous la commande d'un signal d'entrée $i$ (inhibit), les signaux portés par ce conducteur pouvant alors être altérés par l'une ou l'autre des stations esclaves, par exemple par le branchement d'une charge portant son potentiel vers zéro. Ce fonctionnement des buffers sera expliqué plus loin en détail.

L'installation comprend une station maître dont n'a été représenté que l'étage de sortie 20, un bus ne comprenant que deux conducteurs $L_1$ et $L_2$, et plusieurs stations esclaves 23 dont seule une partie de l'une d'elles a été représentée. L'étage de sortie 20 reçoit de la station maître un signal $s$, représentant le message que la station maître doit envoyer aux stations esclaves, et un signal $i$ d'inhibition des buffers. La station maître reçoit de son étage de sortie 20 des signaux $v$, $w$ représentant les messages que les stations esclaves peuvent envoyer à la station maître. Les électroniques de commande des deux conducteurs $L_1$ et $L_2$ étant les mêmes, seule celle relative au conducteur $L_1$ sera décrite ici. Le buffer comprend trois interrupteurs (constitués en réalité par des transistors travaillant en tout ou rien) 24, 25 et 26, le premier permettant de mettre le conducteur $L_1$ à la masse 27 (potentiel ∅) lorsqu'il est fermé, le second de le mettre au potentiel $V_+$ et le troisième ne permettant au signal $s$ commandant 25 de n'être appliqué que lorsque 26 est fermé, c'est-à-dire que lorsque le signal ihn est à ∅. Il y a lieu de noter que, lorsque les tensions de commande respectives des interrupteurs 24, 25 et 26 sont à "1" (valeur logique), 25 est fermé et 24 et 26 sont ouverts, et inversement. L'interrupteur 26 est commandé par l'intermédiaire d'un porte EP 28 dont la sortie commande l'une des entrées d'une deuxième porte ET 29 dont la sortie porte l'un des signaux $v$ pouvant être reçu à l'étage-maître. L'autre entrée de cette porte ET 29 est constituée par la sortie d'un comparateur 30 dont l'une des entrées est constituée par une source de potentiel 31 dont la valeur est la moitié de celle de 32, c'est-à-dire $V_+/2$. L'entrée négative du comparateur 30 est reçue du conducteur $L_1$ qui est relié à la source 32 par une résistance 33.

L'électronique de commande du conducteur $L_2$ est la même que celle qui vient d'être décrite, à la différence que le signal s est appliqué par l'intermédiaire d'un inverseur 34 puisque les signaux appliqués aux conducteurs $L_1$ et $L_2$ doivent être de phases inverses, cette électronique permettant la réception d'un deuxième signal w par la station maître. Les stations esclaves 23 comprennent un redresseur formé de quatre diodes 34, 35, 36 et 37 et d'un condensateur 38 assurant ensemble l'alimentation en puissance de toute l'électronique de la station. Le fonctionnement de cette alimentation est la même que dans le cas de l'installation de la fig. 1, aussi ne sera-t-il par décrit ici.

Les deux conducteurs $L_1$ et $L_2$ sont reliés, par deux diodes 39 et 40 de séparation des conducteurs, à une résistance commune 41 pouvant être reliée au pôle négatif du condensateur 38 par un interrupteur électronique 42. Cet interrupteur, constitué par un transistor travaillant en tout ou rien, est commandé par une électronique 43 recevant elle-même des signaux de commande du conducteur $L_1$ par l'intermédiaire d'un diviseur de tension comprenant deux résistances 44 et 45 montées en série.

Les stations esclaves 23 comprennent encore un décodeur des signaux reçus, une électronique de traitement des messages reçus de la station maître, et une électronique de traitement des messages destinés à la station maître, qui ne seront pas décrits, étant de construction usuelle.

Chaque buffer permettant trois états, c'est-à-dire un état $\emptyset$ dans lequel le conducteur correspondant $L_1$ ou $L_2$ est relié à la masse 27, un état 1 dans lequel le conducteur est relié à la source $V_+$ 32 et un état X dans lequel le conducteur n'est relié ni à l'un ni à l'autre, c'est-à-dire dans lequel il se trouve à haute impédance, on a au total neuf possibilités dont certaines sont à proscrire afin qu'à aucun moment les stations ne soient coupées du potentiel de référence $\emptyset$ V.

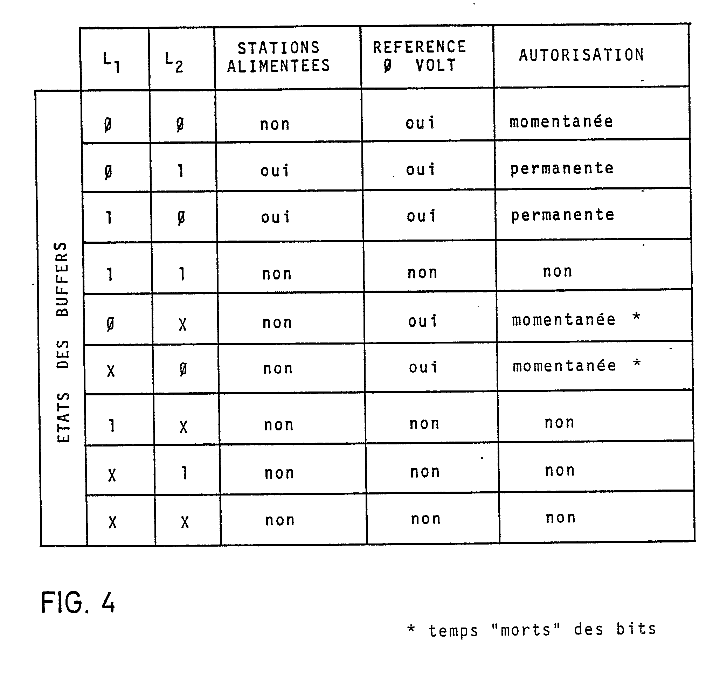

Comme représenté au tableau de la fig. 4, deux états sont permis en permanence et trois ne le sont qu'un court instant durant lequel, l'alimentation n'étant plus fournie aux stations, c'est la capacité interne à chacune d'elles qui assure l'intérim.

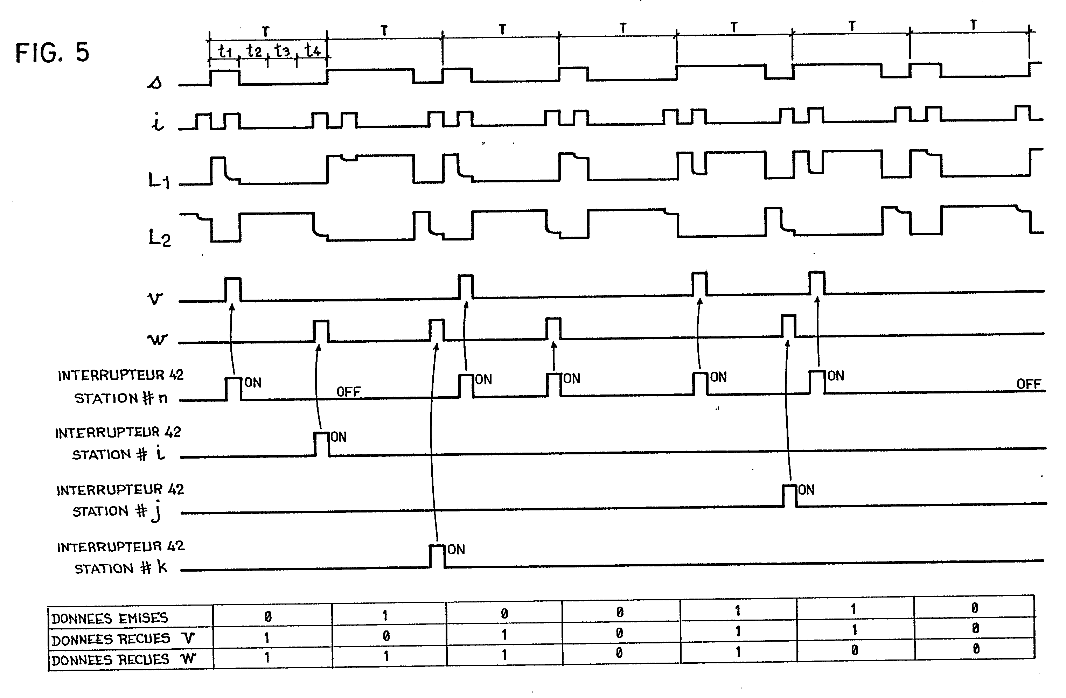

L'effet de l'état X sur le conducteur $L_1$, avec les restrictions prévues dans le tableau de la fig. 4, c'est-à-dire durée limitée pour l'état X et conducteur $L_2$ à l'état $\emptyset$, ce qui représente le premier temps mort de chaque bit, sera examiné ci-après : les interrupteurs 24 et 25 étant dans les positions représentées à la fig. 3 alors que les interrupteurs correspondants de l'autre buffer sont fermés, respectivement ouverts, puisque $L_2$ est à $\emptyset$ V, on voit que le conducteur $L_1$ va demeurer sensiblement à la tension $V_+$ s'il était à cette tension avant l'application de l'état X et si l'interrupteur 42 demeure ouvert pendant cet état X, ceci grâce à la résistance 33. En fait, elle descend quelque peu en dessous de la tension régnant aux bornes du condensateur 38. Si, maintenant, la logique 43 ferme au contraire l'interrupteur 42 durant l'état X de $L_1$, la tension de $L_1$ va être tirée au potentiel $\emptyset$ de $L_2$ à travers le circuit 39-41-42-37, la résistance 41 étant de valeur plus faible que la résistance 33. La fermeture de l'interrupteur 42 altère ainsi le signal porté par $L_1$. Cette altération, pendant l'état X du conducteur $L_1$, peut être détectée par le comparateur 30 puisque, lorsque la tension de $L_1$ passe de $V_+$ à $\emptyset$ V, elle passe forcément par $V_+/2$, la sortie du comparateur 30 changeant d'état, tandis que, si 42 demeure ouvert pendant l'état X, $L_1$ demeure sensiblement à la tension $V_+$ et la sortie de 30 ne change pas. Ce fonctionnement est illustré en détail à la fig. 5. Comme on le voit, on utilise le temps $t_1$ pour retourner des données par le truchement de $L_1$, car la situation des conducteurs ($L_1 = 1$, $L_2 = \emptyset$) se prête à la mise à l'état X de $L_1$.

La situation est la même, mais inverse, au temps $t_4$, ce qui permet d'appliquer à $L_2$, à cet instant, qui représente le deuxième temps mort de chaque bit, le même processus qu'à $L_1$ au temps $t_1$.

On remarquera, ce qui est très important, que ce circuit a le grand avantage de ne pas utiliser l'énergie stockée dans la capacité 38 de la station esclave pour l'envoi de ces données en retour, mais uniquement l'énergie fournie par les conducteurs $L_1$ et $L_2$. De plus si, par suite d'un mauvais fonctionnement, plusieurs stations venaient à répondre en même temps, du fait que les différents interrupteurs 42 travaillent en parallèle, il ne s'ensuivrait aucun dommage pour l'électronique. Simplement, le protocole des messages détecterait une erreur.

Ainsi, on a la possibilité très intéressante de retourner, pendant le temps même d'émission d'un message par la station maître, non pas un message, mais deux, de nature totalement différente et, qui plus est, aussi bien par la même station que par plusieurs stations distinctes, et toujours à l'aide d'un bus ne comportant que deux conducteurs.

En résumé, le procédé et l'installation permettent les fonctions suivantes, et dans les conditions indiquées :

1/ Alimentation en puissance des stations esclaves obtenue simplement par le redressement des signaux de commande qu'elles reçoivent, ces signaux étant en opposition de phase sur les deux conducteurs du bus, de sorte qu'il n'y a pas un conducteur stable et un conducteur porteur, mais deux conducteurs porteurs.

2/ Transmission des signaux de commande de la station maître aux stations esclaves, ceci par transmission série de signaux digitaux. Les bits de ceux-ci ne sont pas d'un seul tenant mais d'un format tel qu'ils présentent des temps morts permettant, en vue de l'exécu tion de la fonction 3 exposée ci-après, de rendre possible --par la mise à impédance élevée d'un des conducteurs du bus-- une altération de ces signaux sans compromettre leur réception. Une telle altération consiste à interrompre momentanément la transmission fidèle du signal en cause.

3/ Renvoi, et ui plus est simultanément avec la réception, d'informations en provenance des stations esclaves en direction et à l'intention de la station maître. Ces informations en retour se présentent sous la forme de la présence ou de l'absence d'une altération, par les stations esclaves, des signaux qu'elles reçoivent en provenance de la station maître. Si, au moment où une telle altération est possible, c'est-à-dire lorsque l'un ou l'autre des conducteurs du bus est à haute impédance, une station esclave doit profiter de cette faculté, c'est-à-dire altérer le signal qu'elle reçoit, elle le fait en chargeant fortement celui des deux conducteurs du bus qui est mis à impédance élevée.

Il est à remarquer que la deuxième voie de retour de messages (w) par $L_2$ peut servir à de multiples attributions. On pourra avantageusement la réserver au passage de signaux d'interruption (interrupt) pouvant être générés par les stations.

Un bus de ce type, ne possédant pas d'interrupt, ne permet à la station maître de connaître les besoins des stations esclaves qu'en les lisant tour à tour. Cependant, il arrive fréquemment que, pour toutes sortes de raisons, une station ait une conversation urgente à établir. Il faut donc pour cela pouvoir interrompre le cycle naturel des messages.

Ainsi, dans la présente installation, toute station esclave équipée de la logique "interrupt" (il est des stations où celle-ci n'est pas requise) peut, à chaque message, insérer un "interrupt" sur le conducteur $L_2$ au moment du passage du bit dont le numéro compté à partir du début du message correspond au numéro de ladite station, c'est-à-dire au nombre binaire codé à l'aide des adresses spécifiques de la station.

Bien entendu, ces signaux d'"interrupt" n'apparaissent que si l'une ou l'autre station esclave en fait la demande suite à un processus interne.

Par cette façon de procéder, la station maître peut, dans le seul passage d'un message, non seulement détecter s'il y a demande d'interruption, mais quelle est la station dont elle émane.

Toutefois, le nombre des stations pouvant provoquer un "interrupt" est limité au nombre de bits contenus dans un message. Il ne s'agit pas là d'un inconvénient à proprement parler, car le nombre de stations nécessitant un système d'interruption reste, dans la majorité des cas, minoritaire.

Le fait que l'alimentation de chacune des stations esclaves se fasse à partir de la station maître, par l'intermédiaire du bus, n'interdit pas d'alimenter une station esclave, nécessitant une forte consommation en puissance, par une source de tension extérieure; il suffit pour cela de brancher celle-ci en parallèle sur le condensateur de la station.

En variante, on pourra ne prévoir qu'une voie de retour au lieu des deux qui ont été représentées à la fig. 3; dans ce cas, la logique relative à la voie v ou w qui aura été supprimée dans la station maître, devient inutile.

Selon une variante, on pourra prévoir une autre possibilité d'information à l'aide des deux conducteurs du bus. En effet, le début d'un message doit être annoncé par l'envoi d'un "start message" reconnaissable à l'absence d'information pendant 2 x T, temps pendant lequel $L_1$ et $L_2$ sont stables. Cependant, un seul conduteur suffit à détecter ce moment, par exemple $L_1 = \emptyset$ V. A part le fait que, comme dans le états X, l'alimentation serait momentanément absente, rien d'empêcherait de générer sur $L_2$ une ou plusieurs impulsions passant de V+ à $\emptyset$ V, reconnaissables au fait que $L_1$ reste à $\emptyset$ V. Ces impulsions pourraient, par exemple, annoncer l'arrivée d'un message exceptionnel.

La présente invention trouvera des applications dans tous les domaines où une gestion d'automatismes est requise, par exemple :

Dans les machines-outils où l'on trouve essentiellement des stations esclaves d'entrées/sorties digitales pour le contrôle des sécurités et des quittances, ainsi que pour l'enclenchement des différentes vannes et contacteurs; dans la robotique, et plus spécialement dans les longs robots à cheminement linéaire où l'on trouve non seulement des stations esclaves d'entrées/sorties, mais également de gestions d'axes en positionnement; dans les bâtiments publics, tels qu'hôtels, centres de conférences, grands ensembles, où il deviendra possible de gérer, par une informatique centralisée, des paramètres très variés comme par exemple des éclairages personnalisés et leur consommation, des distributeurs de toutes sortes, les différents secteurs de chauffage et de climatisation, par simple adjonction de deux conducteurs à un câble unique d'alimentation du courant alternatif ordinaire; dans l'industrie du spectacle où, jusqu'à présent, les câbles collectés au pupitre de régie sont d'un nombre impressionnant et pourront être remplacés, comme dans l'exemple du bâtiment, par un câble unique.

Bien d'autres domaines pourraient encore être cités.

En variante, le bus de connexion entre les différentes stations pourra comporter plus de deux conducteurs.

## Revendications

1. Procédé de transmission électronique bidirectionnelle de données entre une station maître et des stations esclaves, avec alimentation en puissance de ces dernières par la station maître, caractérisé par le fait qu'on utilise, pour relier la station maître aux stations esclaves, un bus à au moins deux conducteurs et donne aux stations esclaves, ceci en interrompant momentanément la transmission fidèle du signal généré par la station maître sur l'un des deux conducteurs du bus, la faculté d'altérer les données que lesdites stations esclaves reçoivent, la présence ou l'absence de telles altérations constituant une information que le stations esclaves transmettent à la station maître, les bits des signaux porteurs de données transmis par la station maître ayant un format tel qu'ils ne soient pas d'un seul tenant mais présentent au moins une zone "morte" où ils ne déploient pas d'effet, pendant laquelle s'effectue l'interruption momentanée de la transmission fidèle du signal sur l'un des deux conducteurs du bus sans que cette interruption ait d'influence sur la réception par les stations esclaves des signaux provenant de la station maître, le tout de manière à permettre aux stations esclaves de transmettre des données en retour vers la station maître en même temps qu'elles reçoivent les données en provenance de celle-ci.

2. Procédé suivant la revendication 1, caractérisé par le fait qu'on utilise des signaux dont le format de chaque bit présente au moins deux zones mortes permettant d'interrompre la transmission fidèle du signal, l'une sur l'un des conducteurs du bus et l'autre sur l'autre conducteur, ce qui permet, pendant la réception de chaque signal par les stations esclaves, le retour de deux informations en direction de la station maître, ces deux informations provenant toutes deux de la même station esclave ou de deux stations esclaves différentes.

3. Procédé suivant la revendication 1, caractérisé par le fait qu'on réalise l'interruption de la transmission fidèle d'un signal en mettant à impédance élevée l'un ou l'autre des deux conducteurs du bus.

4. Procédé suivant la revendication 3, caractérisé par le fait que l'altération des données reçues par les stations esclaves est obtenue par l'établissement d'une charge sur celui des deux conducteurs du bus qui est alors placé à haute impédance, charge dont la présence est détectable par la station maître.

5. Installation pour la mise en oeuvre du procédé suivant la revendication 1, caractérisée par le fait qu'elle comprend une station maître et plusieurs stations esclaves, un bus de connexion reliant l'ensemble de ces stations, lequel ne comporte que deux conducteurs, des moyens dans la station maître d'émission de signaux digitaux à l'intention des stations esclaves qui servent à l'alimentation et à la commande de celles-ci, le format de chaque bit de ces signaux présentant au moins une zone "morte", des moyens dans les stations esclaves de réception et d'interprétation desdits signaux, des moyens dans la station maître d'interruption de la transmission fidèle desdits signaux sur l'un des deux conducteurs du bus, opérant pendant les zones mortes des bits de ces signaux, et des moyens permettant aux stations esclaves d'envoyer des informations à la station maître pendant lesdites interruptions de transmission fidèle, le tout de telle manière que ce retour d'informations à la station maître n'ait pas d'influence sur la réception, par les stations esclaves, des signaux émis par la station maître.

6. Installation suivant la revendication 5, caractérisée par le fait que les moyens d'interruption de la transmission fidèle des signaux provenant de la station maître sont constitués par des moyens de mise à haute impédance de l'un ou l'autre des conducteurs du bus.

7. Installation suivant la revendication 5, caractérisée par le fait que les moyens permettant aux stations esclaves d'envoyer des informations à la station maître pendant les interruptions de la transmission fidèle des signaux sont constitués par des moyens de mise sous charge du conducteur du bus alors à haute impédance.

8. Installation suivant la revendication 5, caractérisé par le fait que la station maître comprend des moyens (2, 3) pour générer un signal (S) constituant l'information qu'elle envoie aux stations esclaves, et qui est constitué par une séquence d'impulsions d'égale durée T, se composant elle-même de quatre périodes successives $t_1, t_2, t_3, t_4$, pendant la première $t_1$ desquelles le signal (S), sur l'un ($L_1$) des conducteurs du bus est toujours positif et pendant la dernière $t_4$ desquelles le signal est toujours nul, de sorte que les impulsions débutent toujours par un flanc positif, le signal étant soit positif soit nul pendant les deux autres périodes $t_2, t_3$, selon que l'impulsion représente un bit de valeur logique 1 ou de valeur logique 0.

9. Installation suivant la revendication 8, caractérisée par le fait qu'au moins l'un des conducteurs du bus est commandé, à la station maître, par un buffer à trois états dans le premier desquels le conducteur est forcé à une tension positive (V+), dans le second desquel il est forcé à une tension nulle (∅ V), et dans le troisième desquels il est libéré du buffer, par le fait que la station maître applique, au cours de l pre mière ou quatrième période de la durée (T), une impulsion d'inhibition du buffer de manière à l'amener dans le troisième état, le conducteur étant en outre relié à une source de tension positive (V+) par l'intermédiaire d'une résistance (33), et par le fait que les stations esclaves devant envoyer un message en retour vers la station maître comprennent un commutateur électronique (42) capable de mettre le conducteur à la masse par l'intermédiaire d'une résistance (41) de plus faible valeur que la résistance (33) susmentionnée, de sorte que, si le commutateur est fermé pendant le troisième état, le conducteur passe sensiblement à 0 V pendant cette période tandis qu'il rest à V+ si le commutateur n'est pas fermé, l'ouverture ou la fermeture du commutateur étant détectée, à la station maître, par un comparateur (29).

10. Installation suivant la revendication 9, caractérisée par le fait que les deux conducteurs du bus sont chacun commandés à la station maître par un buffer à trois états, la station maître appliquant au buffer commandant le conducteur ($L_1$) une impulsion d'inhibition pendant la deuxième partie de la première période $t_1$ dudit signal (S) et au buffer commandant le conducteur ($L_2$) une impulsion d'inhibition pendant la deuxième partie de la quatrième période $t_4$ dudit signal (S).

FIG. 1

FIG. 2

FIG. 3

| | $L_1$ | $L_2$ | STATIONS ALIMENTEES | REFERENCE Ø VOLT | AUTORISATION |
|---|---|---|---|---|---|
| ETATS DES BUFFERS | Ø | Ø | non | oui | momentanée |
| | Ø | 1 | oui | oui | permanente |
| | 1 | Ø | oui | oui | permanente |
| | 1 | 1 | non | non | non |
| | Ø | X | non | oui | momentanée * |
| | X | Ø | non | oui | momentanée * |
| | 1 | X | non | non | non |
| | X | 1 | non | non | non |
| | X | X | non | non | non |

FIG. 4

\* temps "morts" des bits

# FIG. 5

| DONNEES EMISES | 0 | 1 | 0 | 0 | 1 | 1 | 0 |
|---|---|---|---|---|---|---|---|
| DONNEES RECUES $v$ | 1 | 0 | 1 | 0 | 1 | 1 | 0 |
| DONNEES RECUES $w$ | 1 | 1 | 1 | 0 | 1 | 0 | 0 |

EP 0 306 934 A2